# EUROPÄISCHE PATENTANMELDUNG

(11) **EP 4 650 765 A1**
(43) Veröffentlichungstag der Anmeldung: **19.11.2025**
(21) Anmeldenummer: 25158526.1
(22) Anmeldetag: 18.02.2025
(51) Int. Cl.: G01N 25/66

(54) **MESSVORRICHTUNG UND VERFAHREN ZUR BESTIMMUNG UND AUSGABE DER TAUPUNKTTEMPERATUR EINES UMGEBENDEN MEDIUMS**

(30) Priorität: 15.05.2024 DE 102024001578
(71) Anmelder: E+E ELEKTRONIK GES.M.B.H., 4209 Engerwitzdorf (AT)
(72) Erfinder: ENSER, Herbert, 4209 Linz (AT); GRATZL, Joachim, 3060 Leonding (AT); HAIDER, Albin, 4211 Alberndorf (AT); JAHN, Karl, 4623 Gunskirchen (AT)
(74) Vertreter: Hofmann, Ernst

(57) **Zusammenfassung**

Die vorliegende Erfindung betrifft eine Messvorrichtung und ein Verfahren zur Bestimmung und Ausgabe der Taupunkttemperatur. Eine erste Feuchtesensoreinheit (10; 110; 210) ist zur Bestimmung mindestens eines Taupunkt-Korrekturparameters ausgebildet und umfasst einen ersten Feuchtesensor (11), einen ersten Temperatursensor (12) sowie ein Temperaturänderungselement (13). Eine zweite Feuchtesensoreinheit (20; 120; 220) ist zur kontinuierlichen Bestimmung der Taupunkttemperatur ausgebildet und umfasst einen zweiten Feuchtesensor (21) und einen zweiten Temperatursensor (22). Mittels einer Steuereinheit (30) wird die Temperatur der ersten Feuchtesensoreinheit (10; 110; 210) über das Temperaturänderungselement (13) verändert und dabei ein Taupunkt-Korrekturparameter bestimmt; ferner wird der Taupunkt-Korrekturparameter aus der ersten Feuchtesensoreinheit (10; 110; 210) herangezogen, um Messwerte der zweiten Feuchtesensoreinheit (20; 120; 220) damit zu korrigieren und basierend auf den korrigierten Messwerten kontinuierlich korrigierte Taupunkttemperaturen auszugeben

## Beschreibung

### BEZEICHNUNG DER ERFINDUNG

Messvorrichtung und Verfahren zur Bestimmung und Ausgabe der Taupunkttemperatur eines umgebenden Mediums

### GEBIET DER TECHNIK

Die vorliegende Erfindung betrifft eine Messvorrichtung sowie ein Verfahren zur Bestimmung und Ausgabe der Taupunkttemperatur eines umgebenden Mediums, insbesondere zur zuverlässigen Messung niedriger Taupunkttemperaturen.

### STAND DER TECHNIK

Die Messung des Taupunkts von Gasen stellt eine wichtige prozesstechnische und meteorologische Messaufgabe dar. Der Taupunkt bzw. die Taupunkttemperatur gibt an, ab welcher Gastemperatur das in dem Gas enthaltene Wasser kondensiert bzw. bezeichnet diejenige Gastemperatur, bei der ein Gas über einer Wasserfläche vollständig mit Wasserdampf gesättigt ist. In manchen Fällen wird eine Taupunkttemperatur unter 0°C auch als Frostpunkttemperatur bezeichnet; die Frostpunkttemperatur bezeichnet dabei diejenige Temperatur, bei der ein Gas über einer Eisfläche vollständig mit Wasserdampf gesättigt ist. Der Taupunkt hingegen bezeichnet die Temperatur, bei der das Gas über einer Wasseroberfläche vollständig gesättigt ist. Im Folgenden sei nur von der Taupunkttemperatur die Rede, auch bei Taupunkttemperaturen unter 0°C.

Erfolgt eine Kondensation zum Beispiel in Druckluftanlagen, sind Schäden an der Anlage und Qualitätseinbußen am Endprodukt die Folge. In der Gebäudetechnik werden Messvorrichtungen zur Bestimmung der Taupunkttemperatur (Taupunktmessgeräte, Taupunktwächter) eingesetzt, um die Gefahr einer Kondensationsbildung, zum Beispiel bei Klimadecken, in Rohrleitungen oder Schaltschränken, rechtzeitig zu erkennen, noch bevor es zu Schäden kommt. Eine Messung der Taupunkttemperatur erfolgt dabei üblicherweise nicht direkt, sondern über die Messung von Temperatur und relativer Luftfeuchtigkeit und der geeigneten Verrechnung dieser Größen.

Werden für die Messung der relativen Luftfeuchtigkeit kapazitive Feuchtesensoren eingesetzt, so kann es in mehrfacher Hinsicht sinnvoll sein, diese Feuchtesensoren zyklisch zu erhitzen.

Beispielsweise kann dies bei dauerhaft hohen Feuchtewerten über 80%rH erforderlich werden, da kapazitive Feuchtesensoren eine sogenannte Hochfeuchtedrift zeigen. Das heißt, bei hohen relativen Feuchtewerten zeigt der Feuchtesensor über einen längeren Zeitraum zu hohe Feuchtewerte an, woraus zu hohe Taupunkttemperaturen resultieren.

Im Fall von niedrigen Taupunkttemperaturen müssen nur sehr kleine Messwerte bezüglich der relativen Luftfeuchtigkeit erfasst werden. Es resultieren hierbei hohe Anforderungen an die Genauigkeit der Luftfeuchte-Messung. Beim Einsatz kapazitiver Feuchtesensoren wird üblicherweise die Kapazitätsänderung eines geeigneten Polymers als Messgröße für die relative Feuchtigkeit genutzt. Um das verwendete Polymer während einer Messung immer wieder in einen definierten Kalibrationszustand zu versetzen, ist es üblich, die Messvorrichtung zyklisch zu erhitzen, beispielsweise alle 30 Minuten.

Weiterhin kann ein zyklisches Erhitzen des Feuchtesensors nötig werden, wenn dieser in chemisch invasiven Umgebungen mit Mischgasen eingesetzt wird, die sich anstelle von Wassermolekülen im Feuchtepolymer einlagern können. Dies führt ebenso zu Kapazitäts-Änderungen, die nicht von feuchtebedingten Kapazitätsänderungen zu unterschieden sind. In diesem Falle kann der Feuchtesensor über das zyklische Erhitzen immer wieder in einen definierten Kalibrationszustand zurücküberführt werden. Dies kann z.B. auch bei Feuchtesensoren vorteilhaft sein, die nicht auf kapazitiven Detektionsprinzipien basieren.

Ein derartiges zyklisches Heizen hat jedoch für die Taupunktmessung bestimmte Konsequenzen. So stehen für die Dauer der Aufheiz- und Abkühlphase keine Messwerte zur Bestimmung der Taupunkttemperatur zur Verfügung; die entsprechende Zeitdauer kann sich u.U. dabei auch über einige Minuten erstrecken. Weiterhin dauert es auch nach dem Abkühlen noch eine bestimmte Zeit, bis die aktuelle Taupunkttemperatur wieder korrekt erfasst werden kann. Die Taupunkttemperatur wird dann auch wiederum nur über eine begrenzte Zeit korrekt bestimmt, danach driftet die Taupunkttemperatur in Richtung zu hoher Werte. Man spricht in diesem Zusammenhang auch von einem "Sägezahneffekt" in Bezug auf den zeitlichen Verlauf der Taupunktbestimmung.

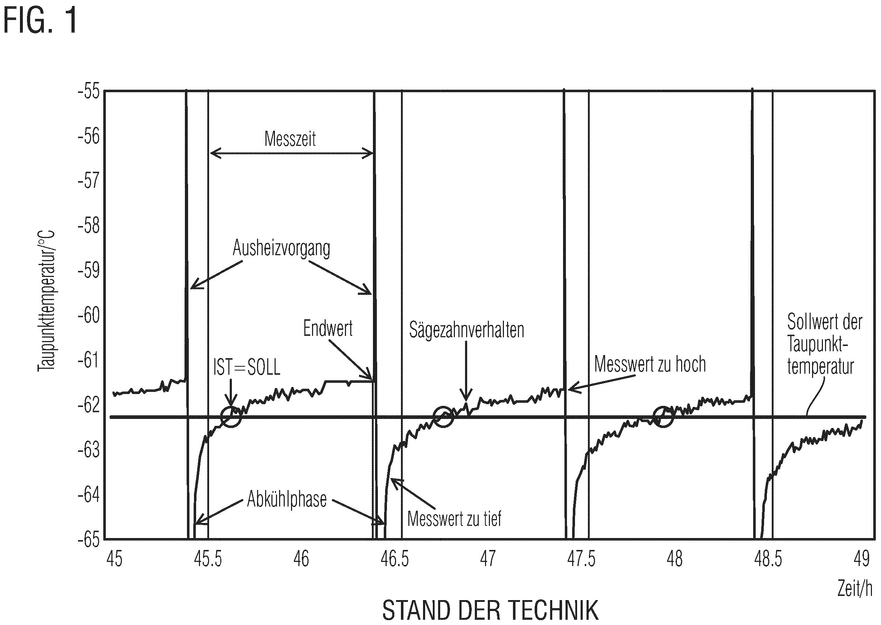

Das vorstehend erläuterte Verhalten ist im Diagramm der Figur 1 dargestellt. Dieses zeigt den Verlauf der gemessenen Taupunkttemperatur über einen größeren Zeitraum, in dem ein kapazitiver Feuchtesensor alle 30 Minuten jeweils aufgeheizt bzw. ausgeheizt wird; weiterhin ist in der Figur als durchgängige waagerechte Linie die korrekte Taupunkttemperatur bzw. der Sollwert der Taupunkttemperatur dargestellt. Nach dem Aufheizvorgang resultiert wie aus der Figur ersichtlich jeweils eine Abkühlphase, in der der Feuchtesensor wieder die Umgebungstemperatur annimmt und in der ebenfalls keine korrekte Taupunkttemperatur bestimmbar ist. Nach der Abkühlphase dauert es dann eine gewisse Zeit, bis wieder die korrekte Taupunkttemperatur bestimmt werden kann. Nach einiger Zeit bewegt sich die Taupunkttemperatur aufgrund der Veränderung des feuchteempfindlichen Polymers in Richtung zu hoher Werte, bis wieder aufgeheizt wird und nach einer erneuten Abkühlphase für eine bestimmte Messdauer wieder die korrekte Taupunkttemperatur bestimmbar ist usw..

Ein mögliches Vorgehen, um bei einer Sensoranordnung mit mehreren kapazitiven Sensoreinheiten Fehler zu minimieren, die durch das zyklische Heizen dieser Sensoreinheiten auftreten, ist aus der JP 2012-154632 A2 bekannt. Dabei sollen durch das alternierende Heizen von zwei Sensoreinheiten Fehler vermieden werden, die durch Kontamination des Polymers bzw. durch eine Drift der Messwerte bei sehr hohen Feuchten verursacht werden. Die vorstehend erwähnten Probleme bei einer Taupunktmessung, insbesondere bei niedrigen Taupunkttemperaturen, lassen sich über die aus dieser Druckschrift bekannten Maßnahmen jedoch nicht beseitigen.

### ZUSAMMENFASSUNG DER ERFINDUNG

Der vorliegenden Erfindung liegt die Aufgabe zugrunde, eine Messvorrichtung sowie ein Verfahren zur Bestimmung und Ausgabe der Taupunkttemperatur eines umgebenden Mediums anzugeben, die insbesondere zur Messung niedriger Taupunkttemperaturen geeignet sind. Es soll dabei möglichst durchgängig eine zuverlässige Bestimmung der Taupunkttemperatur des umgebenden Mediums sichergestellt sein.

Diese Aufgabe wird erfindungsgemäß durch eine Messvorrichtung mit den Merkmalen des Anspruchs 1 gelöst.

Vorteilhafte Ausführungen der erfindungsgemäßen Messvorrichtung ergeben sich aus den Maßnahmen, die in den von Anspruch 1 abhängigen Ansprüchen aufgeführt sind.

Die erfindungsgemäße Messvorrichtung zur Bestimmung und Ausgabe der Taupunkttemperatur eines umgebenden Mediums weist eine erste Feuchtesensoreinheit auf, die zur Bestimmung mindestens eines Taupunkt-Korrekturparameters ausgebildet ist und einen ersten Feuchtesensor, einen ersten Temperatursensor sowie ein Temperaturänderungselement umfasst. Weiterhin ist eine zweite Feuchtesensoreinheit vorgesehen, die zur kontinuierlichen Bestimmung der Taupunkttemperatur ausgebildet ist und einen zweiten Feuchtesensor und einen zweiten Temperatursensor umfasst. Eine Steuereinheit ist derart ausgebildet und eingerichtet, um die Temperatur der ersten Feuchtesensoreinheit über das Temperaturänderungselement zu verändern und dabei einen Taupunkt-Korrekturparameter zu bestimmen. Der Taupunkt-Korrekturparameter aus der ersten Feuchtesensoreinheit wird von der Steuereinheit herangezogen, um Messwerte der zweiten Feuchtesensoreinheit damit zu korrigieren und basierend auf den korrigierten Messwerten kontinuierlich korrigierte Taupunkttemperaturen auszugeben.

Vorzugsweise ist die zweite Feuchtesensoreinheit mit einem Kühlelement thermisch gekoppelt, das Wärme von der zweiten Feuchtesensoreinheit an die Umgebung ableitet.

Mit Vorteil ist die zweite Feuchtesensoreinheit thermisch entkoppelt von der ersten Feuchtesensoreinheit angeordnet.

Weiterhin kann vorgesehen sein,
- dass die beiden Feuchtesensoreinheiten an den entgegengesetzten Enden eines Trägerelements angeordnet sind, welches im Bereich zwischen den beiden Feuchtesensoreinheiten zur thermischen Entkopplung materialverringert ausgebildet ist, und
- dass das Trägerelement von einem Gehäuse umgeben ist, das mehrere Öffnungsfenster aufweist.

Ferner ist möglich, dass die beiden Feuchtesensoreinheiten auf zwei separaten Trägerelementen angeordnet sind, zwischen denen ein Wärmeleitschild angeordnet ist, welcher die durch Wärmestrahlung darauf übertragene Wärme in Richtung eines damit verbundenen Kühlkörpers ableitet.

Vorzugsweise ist benachbart zur zweiten Feuchtesensoreinheit als Kühlelement ein Kühlkörper aus einem gut wärmeleitenden Material auf dem Trägerelement angeordnet.

Weiterhin kann mindestens ein Trägerelement einen elektrischen Anschluss zur Verbindung mit der Steuereinheit aufweisen, um Daten und Steuersignale zwischen den Feuchtesensoreinheiten und der Steuereinheit zu übertragen.

In einer vorteilhaften Ausführungsform sind die beiden Feuchtesensoreinheiten als integrierte Bausteine ausgebildet.

Weiterhin wird die oben genannte Aufgabe durch ein Verfahren mit den Merkmalen des Anspruch 9 gelöst.

Vorteilhafte Ausführungen des erfindungsgemäßen Verfahrens ergeben sich aus den Maßnahmen, die in den von Anspruch 9 abhängigen Ansprüchen aufgeführt sind.

Für das erfindungsgemäße Verfahren zur Bestimmung und Ausgabe der Taupunkttemperatur eines umgebenden Mediums ist eine erste Feuchtesensoreinheit vorgesehen, aus deren Messwerten bezüglich Temperatur und relativer Feuchte mindestens ein Taupunkt-Korrekturparameter bestimmt wird. Weiterhin ist eine zweite Feuchtesensoreinheit vorgesehen, aus deren Messwerten bezüglich Temperatur und relativer Feuchte kontinuierlich eine Taupunkttemperatur bestimmt und ausgegeben wird. Die Temperatur der ersten Feuchtesensoreinheit wird verändert und dabei jeweils ein Taupunkt-Korrekturparameter bestimmt, und der Taupunkt-Korrekturparameter wird verwendet, um einen Messwert der zweiten Feuchtesensoreinheit damit zu korrigieren und basierend auf den korrigierten Messwerten kontinuierlich korrigierte Taupunkttemperaturen auszugeben.

Vorzugsweise erfolgt das Verändern der Temperatur und das Bestimmen des mindestens einen Taupunkt-Korrekturparameters zyklisch.

Hierzu kann vorgesehen sein, dass zur Bestimmung des mindestens einen Taupunkt-Korrekturparameters über die erste Feuchtesensoreinheit zu mindestens zwei definierten Zeitpunkten bei unterschiedlichen Temperaturen aus den jeweils gemessenen Temperaturen und relativen Feuchten die jeweiligen Taupunkttemperaturen bestimmt werden und im Fall der Nicht-Übereinstimmung der beiden Taupunkttemperaturen ein Messwert bezüglich relativer Feuchte so korrigiert wird, dass die Taupunkttemperaturen bei den unterschiedlichen Temperaturen übereinstimmen.

Es ist weiterhin möglich, dass zur Bestimmung des mindestens einen Taupunkt-Korrekturparameters über die erste Feuchtesensoreinheit
- zu mindestens zwei definierten Zeitpunkten bei unterschiedlichen Temperaturen aus den jeweils gemessenen Temperaturen und relativen Feuchten die jeweiligen Taupunkttemperaturen bestimmt werden, und
- aus dem ermittelten Taupunkt bei der niedrigeren Temperatur und der gemessenen höheren Temperatur eine ideale relative Feuchte bestimmt wird, und
- aus der Differenz zwischen der idealen relativen Feuchte und der gemessenen relativen Feuchte bei der höheren Temperatur ein erster Feuchte-Korrekturparameter bestimmt wird, und
- mit Hilfe des ersten Feuchte-Korrekturparameters der Taupunkt-Korrekturparameter in Form eines absoluten Taupunkt-Werts bestimmt wird, und
- der absolute Taupunkt-Wert herangezogen wird, um einen zweiten Feuchte-Korrekturparameter zu bestimmen, der nachfolgend mit den Messwerten bezüglich relativer Feuchte der zweiten Feuchtesensoreinheit zu korrigierten Messwerten bezüglich relativer Feuchte verrechnet wird, um kontinuierlich korrigierte Taupunkttemperaturen auszugeben.

Ferner kann die Verrechnung des zweiten Feuchte-Korrekturparameters mit den Messwerten der zweiten Feuchtesensoreinheit bezüglich relativer Feuchte schrittweise erfolgen.

Mit Vorteil durchläuft die erste Feuchtesensoreinheit zyklisch eine Aufheizphase, eine Abkühlphase und eine Messphase, wobei in allen Phasen über die zweite Feuchtesensoreinheit kontinuierlich die Taupunkttemperatur bestimmt und eine korrigierte Taupunkttemperatur ausgegeben wird.

Über die erfindungsgemäßen Maßnahmen ist nunmehr gewährleistet, dass über die gesamte Messdauer kontinuierlich eine zuverlässige Bestimmung der Taupunkttemperatur möglich ist. Es gibt keine Zeitfenster, in denen kein aktueller Wert der Taupunkttemperatur verfügbar ist; es kann in der jeweiligen Anwendung daher jederzeit schnell auf eine Veränderung der Taupunkttemperatur reagiert werden.

Weiterhin ist sichergestellt, dass der durch das zyklische Ausheizen des Feuchtesensors resultierende, eingangs erwähnte "Sägezahneffekt" bei der Taupunkttemperaturbestimmung beseitigt werden kann, eine durchgängig hochgenaue Bestimmung der Taupunkttemperatur ist somit möglich.

Der sensorseitige Teil der erfindungsgemäßen Messvorrichtung kann in einen sogenannten Stabfühler integriert werden, zusätzliche Sensorik ist nicht erforderlich. Damit kann die Vorrichtung sehr einfach in unterschiedlichen Anwendungen zum Einsatz kommen.

Weitere Einzelheiten und Vorteile der vorliegenden Erfindung seien anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine Darstellung zur Erläuterung des im Stand der Technik auftretenden "Sägezahneffekts" bei der Bestimmung der Taupunkttemperatur;
- Figur 2: ein stark schematisiertes Blockschaltbild eines Ausführungsbeispiels der erfindungsgemäßen Messvorrichtung;
- Figur 3a: eine Explosionsdarstellung des sensorseitigen Teils eines ersten Ausführungsbeispiels der erfindungsgemäßen Messvorrichtung;
- Figur 3b: einen Teil des ersten Ausführungsbeispiels der erfindungsgemäßen Messvorrichtung in montiertem Zustand;
- Figur 3c, 3d: jeweils verschiedene Ansichten des sensorseitigen Teils des ersten Ausführungsbeispiels der erfindungsgemäßen Messvorrichtung;
- Figur 4a: eine Explosionsdarstellung des sensorseitigen Teils eines zweiten Ausführungsbeispiels der erfindungsgemäßen Messvorrichtung;
- Figur 4b: einen Teil des zweiten Ausführungsbeispiels der erfindungsgemäßen Messvorrichtung in montiertem Zustand;
- Figur 4c: eine seitliche Ansicht des sensorseitigen Teils des zweiten Ausführungsbeispiels der erfindungsgemäßen Messvorrichtung;
- Figur 5: eine Darstellung zur Erläuterung des erfindungsgemäßen Verfahrens;
- Figur 6: ein Diagramm mit den über die zwei Feuchtesensoreinheiten ermittelten Taupunkttemperaturen während verschiedener Phasen;
- Figur 7: ein weiteres Diagramm zur Veranschaulichung des Temperaturverlaufs bei der Bestimmung des Taupunktkorrekturparameters

### BESCHREIBUNG DER AUSFÜHRUNGSFORMEN

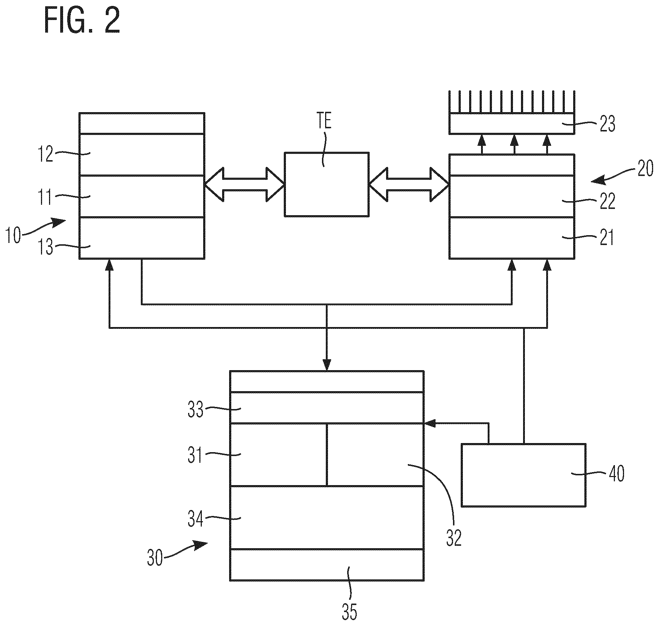

Anhand des stark schematisierten Blockschaltbilds in Figur 2 wird nachfolgend der prinzipielle Aufbau der erfindungsgemäßen Messvorrichtung zur Bestimmung und Ausgabe der Taupunkttemperatur eines Mediums erläutert. Das Medium umgibt dabei die Messvorrichtung, üblicherweise handelt es sich bei typischen Messaufgaben hierbei um Luft oder andere Gase.

Die erfindungsgemäße Messvorrichtung umfasst eine erste Feuchtesensoreinheit 10, eine zweite Feuchtesensoreinheit 20 sowie eine Steuereinheit 30. Mit dem Bezugszeichen 40 ist eine Energieversorgungseinheit bezeichnet, die die verschiedenen Komponenten der Vorrichtung mit Strom bzw. Spannung versorgt. Mit TE wird schematisiert ein Element angedeutet, das bestimmte Maßnahmen zur thermischen Entkopplung zwischen erster und zweiter Feuchtesensoreinheit 10, 20 symbolisieren soll; nähere Erläuterungen hierzu folgen im Verlauf der Beschreibung.

Die erste Feuchtesensoreinheit 10 ist zur Bestimmung einer TaupunktTemperatur Td_{absolut} ausgebildet, die auch als Taupunkt-Korrekturparameter dient, wie im Folgenden noch detailliert erläutert wird. Hierzu weist die erste Feuchtesensoreinheit 10 einen ersten Feuchtesensor 11, einen ersten Temperatursensor 12 sowie ein Temperaturänderungselement 13 auf.

Der Feuchtesensor 11 kann dabei z.B. als kapazitiver Feuchtesensor 11 in bekannter Art und Weise ausgebildet sein und aus zwei Elektroden bestehen, zwischen denen sich ein Polymer befindet, das feuchteabhängig seine Kapazität ändert. Ebenso in bekannter Art und Weise ist der Temperatursensor 12 ausgebildet, z.B. als temperaturabhängiger Widerstand oder als Halbleiterelement. Als Temperaturänderungselement 13 kann beispielsweise ein Heizelement in Form eines Heizdrahts oder ein Halbleiterelement verwendet werden. Weiterhin könnte das Temperaturänderungselement 13 auch als Peltierelement ausgebildet sein, das sowohl in einem Heizmodus wie auch in einem Kühlmodus betreibbar ist und auf diese Art eine Veränderung der Temperatur der ersten Feuchtesensoreinheit 10 ermöglicht.

In einer bevorzugten Ausführungsform ist die erste Feuchtesensoreinheit 10 als integrierter Baustein bzw. ASIC ausgeführt, wie er etwa unter der Bezeichnung HTE501 von der Anmelderin vertrieben wird; dieser ASIC ermöglicht eine hochauflösende und damit sehr genaue Feuchtemessung.

Die zweite Feuchtesensoreinheit 20 ist zur kontinuierlichen Bestimmung der Taupunkttemperatur ausgebildet und umfasst einen zweiten Feuchtesensor 21 sowie einen zweiten Temperatursensor 22; weiterhin ist die zweite Feuchtesensoreinheit 20 im dargestellten Beispiel mit einem Kühlelement 23 thermisch gekoppelt, über das Wärme von der zweiten Feuchtesensoreinheit 20 an die Umgebung ableitbar ist. Die zweite Feuchtesensoreinheit 20 ist bezüglich des Feuchte- und Temperatursensors 21, 22 grundsätzlich identisch zur ersten Feuchtesensoreinheit 10 ausgebildet und ist bevorzugt ebenso als integrierter Baustein bzw. ASIC ausgeführt. Als Kühlelement 23 kann ein Kühlkörper aus einem gut wärmeleitenden Material verwendet werden, der z.B. geeignet ausgestaltete Kühlrippen aufweist, um den Wärmeübergang an das umgebende Medium sicherzustellen. In einer vorteilhaften Ausführungsform ist der thermische Widerstand des Kühlelements 23 um einen Faktor 100 (oder größer) kleiner als der thermische Widerstand zwischen der ersten Feuchtesensoreinheit 10 und der zweiten Feuchtesensoreinheit 20 gewählt. Weist etwa das Kühlelement 23 einen thermischen Widerstand von 30K/W zur Umgebung auf, so beträgt die thermische Entkopplung bzw. der thermische Widerstand zwischen den Feuchtesensoreinheiten 10, 20 mindestens 3000K/W. Grundsätzlich ist das Kühlelement 23 kein zwingender Bestandteil der erfindungsgemäßen Vorrichtung, kann aber deren Eigenschaften deutlich verbessern.

Zwischen den beiden Feuchtesensoreinheiten 10, 20 ist schematisiert ein mit TE bezeichnetes Element angedeutet; darüber soll zum Ausdruck gebracht werden, dass die beiden Feuchtesensoreinheiten 10, 20 möglichst thermisch entkoppelt voneinander angeordnet sind. Darunter sei verstanden, dass möglichst keine Wärme von der ersten Feuchtesensoreinheit 10 auf die zweite Feuchtesensoreinheit 20 übertragen wird bzw. möglichst kein thermisches Übersprechen zwischen den beiden Feuchtesensoreinheiten 10, 20 resultiert. Eine derartige thermische Entkopplung TE kann konstruktiv auf unterschiedliche Art und Weise sichergestellt werden; geeignete Möglichkeiten und Maßnahmen hierzu werden im Verlauf der Beschreibung von Ausführungsbeispielen nachfolgend noch näher erläutert.

Die Steuereinheit 30 ist beispielsweise als Mikrokontroller ausgeführt und weist verschiedene Funktionskomponenten auf, die in Figur 2 lediglich stark schematisiert angedeutet sind und die in unterschiedlicher Form soft- und/oder hardwaremäßig realisiert sein können. So besitzt die Steuereinheit 30 zur Kommunikation mit den beiden Feuchtesensoreinheiten 10, 20 eine Kommunikationsschnittstelle 33, beispielsweise ausgebildet als I2C-Schnittstelle, über die Daten und Steuersignale übertragbar sind. Weiterhin sind eine erste und eine zweite Berechnungseinheit 31, 32 vorgesehen, die jeweils die Messwerte der ersten bzw. zweiten Feuchtesensoreinheit 10, 20 verarbeiten, also die darüber erfassten Temperaturen und relativen Feuchten.

Über eine Korrektur- und Ausgabeeinheit 34 erfolgt die nachfolgend noch zu erläuternde Korrektur und Ausgabe der Taupunkttemperatur. Zur Übertragung der Ausgangssignale, insbesondere der Taupunkttemperatur, an eine - nicht dargestellte - Folgeelektronik weist die Steuereinheit 30 weiterhin eine Ausgabeschnittstelle 35 auf, über die Daten z.B. in einem geeigneten digitalen oder analogen Protokoll übertragbar sind.

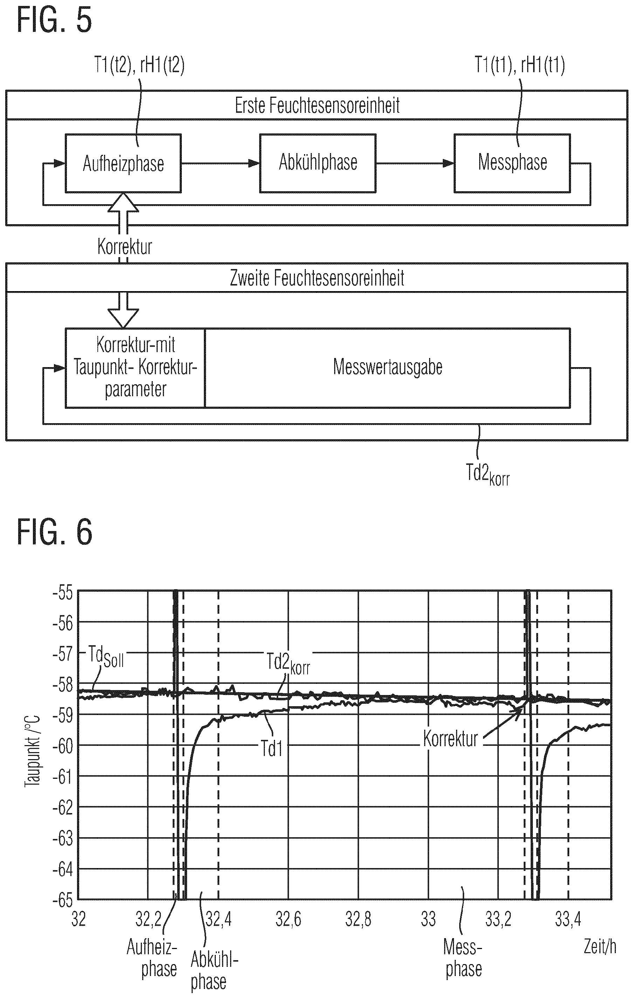

Über die entsprechend ausgebildete und eingerichtete Steuereinheit 30 wird im vorliegenden Beispiel die erste Feuchtesensoreinheit 10 zyklisch in ihrer Temperatur verändert, nämlich zyklisch aufgeheizt und dabei der bereits erwähnte, mindestens eine Taupunkt-Korrekturparameter Td_{absolut} bestimmt. Weiterhin wird von der Steuereinheit 30 der Taupunkt-Korrekturparameter Td_{absolut} herangezogen, um die Messwerte rH2 der zweiten Feuchtesensoreinheit 20 damit zu korrigieren und basierend auf den korrigierten Messwerten rH2ₖₒᵣᵣ kontinuierlich korrigierte Taupunkttemperaturen Td2ₖₒᵣᵣ auszugeben. Eine detaillierte Erläuterung dieses Vorgehens erfolgt im Verlauf der weiteren Beschreibung anhand der Figuren 5 - 7.

Mit Hilfe der im vorliegenden Beispiel zyklisch aufgeheizten ersten Feuchtesensoreinheit 10 werden dabei in einem absolut-messenden Betriebsmodus zyklisch Absolutwerte der relativen Feuchte bestimmt und zur Bildung des Taupunkt-Korrekturparameters Td_{absolut} herangezogen. Die zweite Feuchtesensoreinheit 20 wird im Unterschied hierzu dauerhaft unbeheizt betrieben; über die Messung von Temperatur T2 und relativer Feuchte rH2 kann darüber kontinuierlich die interessierende Taupunkttemperatur bestimmt und eine korrigierte Taupunkttemperatur Td2ₖₒᵣᵣ ausgegeben werden. Die zweite Feuchtesensoreinheit 20 arbeitet dabei in einem relativ-messenden Betriebsmodus bezüglich der relativen Feuchte rH2, d.h. es werden darüber Veränderungen der relativen Feuchte rH2 kontinuierlich aufgelöst, da es nie zu einer Unterbrechung der Messung kommt. Der Bezug auf den Absolutwert der relativen Feuchte, der aus der ersten Feuchtesensoreinheit 10 gewonnen wird, wird nur rechnerisch hergestellt. Wie bereits erwähnt, wird der über die erste Feuchtesensoreinheit 10 bestimmte Taupunkt-Korrekturparameter Td_{absolut} herangezogen, um die Taupunktbestimmung der zweiten Feuchtesensoreinheit 20 immer wieder zu korrigieren und die korrigierte Taupunkttemperatur Td2ₖₒᵣᵣ auszugeben.

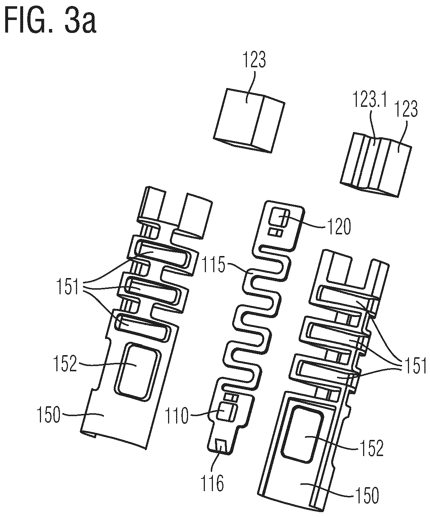

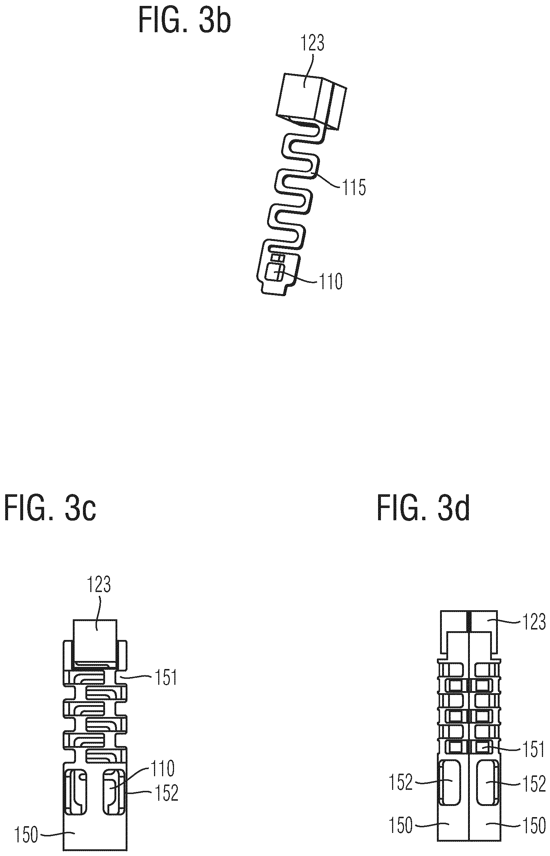

Der sensorseitige Teil eines ersten Ausführungsbeispiels der erfindungsgemäßen Messvorrichtung wird im Folgenden anhand der Figuren 3a - 3d beschrieben; dieser ist als sogenannter Stabfühler ausgeführt und kann damit flexibel in verschiedenen Messanwendungen eingesetzt werden. Nicht in den Figuren dargestellt ist die Steuereinheit der Messvorrichtung. Figur 3a zeigt eine Explosionsdarstellung dieses Teil der Messvorrichtung, die Figuren 3b - 3d weitere Ansichten bzw. Teilansichten derselbigen.

Die beiden Feuchtesensoreinheiten 110, 120 sind im dargestellten Beispiel als integrierte Bausteine bzw. ASICs ausgebildet, die an den entgegengesetzten Enden eines länglichen Trägerelements 115 angeordnet sind. Als Trägerelement 115 fungiert hier eine Leiterplatte, beispielsweise aus FR4-Material, wobei in der Leiterplatte Verbindungsleitungen zu den beiden Feuchtesensoreinheiten 110, 120 bzw. ASICs vorgesehen sind, über die diese Komponenten mit Energie versorgt werden und über die Daten und Steuersignale übertragbar sind. Das Trägerelement 115 ist wie ersichtlich im Bereich zwischen den beiden Feuchtesensoreinheiten 110, 120 materialverringert ausgebildet. Konkret besteht die Leiterplatte in diesem Bereich aus einem mäanderförmigen Leiterplatten-Restbereich. Über eine derartige Ausbildung des Trägerelements 115 wird in diesem Beispiel die thermische Entkopplung zwischen den beiden Feuchtesensoreinheiten 110, 120 gewährleistet, d.h. ein Wärmeübertrag von der zyklisch geheizten ersten Feuchtesensoreinheit 110 am unteren Ende des Trägerelements 115 auf die am oberen Ende des Trägerelements 115 angeordnete zweite Feuchtesensoreinheit 120 wird weitgehend unterbunden.

Die zweite Feuchtesensoreinheit 120 ist im dargestellten Ausführungsbeispiel von einem Kühlelement 123 in Form eines ein- oder zweiteiligen Kühlkörpers umgeben, über den die resultierende Wärme von der zweiten Feuchtesensoreinheit 120 besonders effektiv an die Umgebung abgeleitet wird, so dass die Temperatur des zu messenden Mediums einen möglichst großen Einfluss auf die Feuchtesensoreinheit 120 hat. Damit folgt die Temperatur des Temperatursensors möglichst gut der Mediumtemperatur. Der Kühlkörper besteht z.B. aus Kupfer oder einem anderen, gut wärmeleitenden Material und weist einen Zugangskanal 123.1 in Form einer länglichen Nut auf; über diesen Zugangskanal ist der Zugang des umgebenden Mediums, beispielsweise Luft, zur zweiten Feuchtesensoreinheit 120 sichergestellt. Um eine gute thermische Anbindung des Kühlelements 123 an das Trägerelement 115 bzw. den ASIC zu gewährleisten, ist der Kühlkörper direkt auf dem Trägerelement 115 angelötet.

Das Trägerelement 115 ist im Bereich unterhalb des Kühlkörpers 123 von einem zylinderförmigen Gehäuse 150 umgeben, das mehrere Öffnungsfenster 151, 152 aufweist. Ein etwas größeres Öffnungsfenster 152 befindet sich dabei im Bereich der ersten Feuchtesensoreinheit 110 und ermöglicht hier den Zugang des umgebenden Mediums zur ersten Feuchtesensoreinheit 110. Weitere Öffnungsfenster 151 in Form schmaler Luftschlitze sind im Gehäuse 150 benachbart zum materialverringerten, mittleren Bereich des Trägerelements 123 vorgesehen. Hier tragen die Öffnungsfenster 151 ebenfalls zur thermischen Entkopplung zwischen den beiden Feuchtesensoreinheiten 110, 120 bei, da aufgrund der möglichen Durchströmung des Gehäuses 150 eventuell resultierende Wärme am Trägerelement 115 gut abgeleitet werden kann.

Am unteren Ende weist das Trägerelement 115 weiterhin einen elektrischen Anschluss 116 auf, um Daten und Steuersignale zwischen den Feuchtesensoreinheiten und der - nicht dargestellten - Steuereinheit zu übertragen. Das untere Ende des Trägerelements 115 ist im montierten Zustand dabei mit dem elektrischen Anschluss 116 mit der Steuereinheit und der Energieversorgungseinheit elektrisch verbunden.

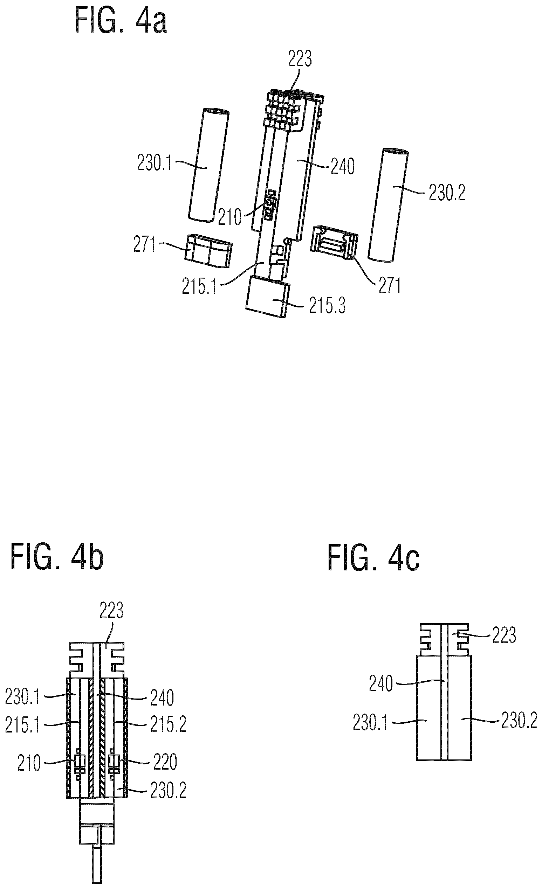

Der sensorseitige Teil eines zweiten Ausführungsbeispiels der erfindungsgemäßen Messvorrichtung wird im Folgenden anhand der Figuren 4a - 4c beschrieben; wiederum nicht in diesen Figuren dargestellt ist die Steuereinheit der Messvorrichtung. Figur 4a zeigt eine Explosionsdarstellung der Vorrichtung, die Figuren 4b und 4c weitere Ansichten bzw. Teilansichten.

Im zweiten Ausführungsbeispiel sind die erste und zweite Feuchtesensoreinheit 210, 220 auf gegenüberliegenden, separaten Trägerelementen 215.1, 215.2 angeordnet, die bevorzugt als dünne, flexible Leiterplatten ausgebildet sind. Im unteren Bereich sind die flexiblen Leiterplatten über flexible Querverbindungen mit einem starren Trägerelementbereich 215.3 verbunden, der aus FR4-Leiterplattenmaterial gebildet wird. Zwischen den beiden Trägerelementen 215.1, 215.2 ist ein rechteckförmiger Wärmeleitschild 240 angeordnet, welcher die durch Wärmestrahlung oder Wärmetransport darauf übertragene Wärme in Richtung eines metallischen Kühlelements 223 ableitet. Der Wärmeleitschild 240 ist vorliegend aus starrem FR4-Leiterplattenmaterial ausgebildet, welches im Bereich des Kühlelements 230 auf den beiden Außenseiten - nicht dargestellte - Kupferflächen auf dem Leiterplattenmaterial aufweist und dort jeweils als thermischer Leiter fungiert, während er dazwischen als thermischer Isolator ausgebildet ist. Neben dem dargestellten einlagigen Aufbau, könnte hier auch eine mehrlagige FR4-Leiterplatte als Wärmeschild fungieren.

Die thermische Entkopplung zwischen den beiden Feuchtesensoreinheiten 210, 220 wird in dieser Ausführungsform der erfindungsgemäßen Vorrichtung somit i.w. durch den Wärmeleitschild 240 sowie das Material der beiden Trägerelemente 215.1, 215.2 gewährleistet.

Im oberen Teil der Messvorrichtung ist an den beiden Trägerelementen 215.1, 215.2 eine Halterung zur mechanischen Stabilität des Aufbaus ausgebildet. Wie aus Figur 4a ersichtlich, wird hierzu das Kühlelement 223 in Form eines metallischen Kühlkörpers ausgebildet. Im unteren Bereich der Vorrichtung sind die flexiblen Leiterplatten über flexible Querverbindungen mit einem starren Trägerelementbereich 215.3 verbunden, der aus FR4-Leiterplattenmaterial gebildet wird. Der starre Trägerelementbereich 215.3 und der Wärmeschild 240 sind wiederum gut voneinander thermisch entkoppelt.

Zum Schutz der beiden Feuchtesensoreinheiten 210, 220 sind die jeweiligen Trägerelemente 215.1, 215.2 im montierten Zustand von hohlzylinderförmigen Filterkappen umgeben, die durchlässig für das Umgebungsmedium sind. Als Filterkappenmaterial kommt hierbei z.B. eine PTFE-Sintermaterial in Betracht.

Nachfolgend wird anhand der Figuren 5 - 7 das erfindungsgemäße Verfahren zur Bestimmung und Ausgabe der Taupunkttemperatur eines umgebenden Mediums näher erläutert.

In Figur 5 sind die verschiedenen Betriebsphasen der beiden Feuchtesensoreinheiten der erfindungsgemäßen Messvorrichtung veranschaulicht. Figur 6 zeigt die in den verschiedenen Betriebsphasen über die Feuchtesensoreinheiten jeweils bestimmten Taupunkttemperaturen; mit Td1 wird darin die über die erste Feuchtesensoreinheit bestimmte Taupunkttemperatur bezeichnet, mit Td2ₖₒᵣᵣ die über die zweite Feuchtesensoreinheit kontinuierlich bestimmte, korrigierte Taupunkttemperatur, die auch ausgegeben wird.

Im oberen Teil von Figur 5 sind die verschiedenen Betriebsphasen der ersten Feuchtesensoreinheit dargestellt. Diese umfassen eine Aufheizphase, eine Abkühlphase und eine Messphase, die vorzugsweise zyklisch durchlaufen bzw. wiederholt werden. In der Aufheizphase wird die erste Feuchtesensoreinheit mit Hilfe des Temperaturänderungselements auf eine vorgegebene Temperatur aufgeheizt, z.B. auf ca. 125°C. In der anschließenden Abkühlphase erfolgt die Abkühlung auf die Umgebungstemperatur. Alternativ kann auch eine aktive Abkühlung unter die Umgebungstemperatur z.B. mit Hilfe eines Peltier-Elements vorgesehen sein, beispielsweise im Fall sehr hoher Umgebungstemperaturen oder sehr niedriger Taupunkttemperaturen. Sowohl in der Aufheiz- und Abkühlphase ist wie aus Figur 6 ersichtlich keine korrekte Bestimmung der tatsächlichen Taupunkttemperatur Td1 aus den Messwerten (Temperatur, relative Feuchte) der ersten Feuchtesensoreinheit möglich. Die über die Messwerte der ersten Feuchtesensoreinheit bestimmte Taupunkttemperatur Td1 ist in diesen beiden Betriebsphasen deutlich zu hoch bzw. zu niedrig. Erst in der nachfolgenden Messphase nähert sich die über die erste Feuchtesensoreinheit bestimmte Taupunkttemperatur Td1 der tatsächlichen Taupunktemperatur Tdₛₒₗₗ an.

Der untere Teil der Darstellung in Figur 5 zeigt das von der ersten Feuchtesensoreinheit unabhängige Verhalten der zweiten Feuchtesensoreinheit, die sich durchgängig in einer Messphase befindet, in der laufend aus den Messwerten bezüglich Temperatur T2 und relativer Feuchte rH2 die aktuelle bzw. korrigierte Taupunkttemperatur Td2ₖₒᵣᵣ bestimmt wird. Die zweite Feuchtesensoreinheit besitzt als einzige Betriebsphase demzufolge durchgängig lediglich die Messphase. Das von der ersten Feuchtesensoreinheit unabhängige Verhalten der zweiten Feuchtesensoreinheit wird dabei durch die oben erwähnte thermische Entkopplung der beiden Feuchtesensoreinheiten in der erfindungsgemäßen Messvorrichtung gewährleistet. Während der durchgängigen Messphase wird seitens der zweiten Feuchtesensoreinheit lediglich zu bestimmten Zeitpunkten immer wieder mindestens ein über die erste Feuchtesensoreinheit bestimmter Taupunkt-Korrekturparameter genutzt, um die laufende Taupunkt-Bestimmung der zweiten Feuchtesensoreinheit zu korrigieren und eine korrigierte Taupunkttemperatur Td2ₖₒᵣᵣ auszugeben.

Wie nachfolgend noch im Detail erläutert wird, sind zur Bestimmung des Taupunkt-Korrekturparameters mittels der ersten Feuchtesensoreinheit Temperatur- und Feuchtemessungen zu mindestens zwei Zeitpunkten t1, t2 mit unterschiedlichen Temperaturen T1(t1), T1(t2) erforderlich. Die entsprechenden Zeitpunkte t1, t2 werden hierbei möglichst eng beieinanderliegend gewählt, wobei z.B. ein erster Zeitpunkt t1 bei Umgebungstemperatur (oder darunter) in der Messphase liegt und ein zweiter Zeitpunkt t2 bei einer erhöhten Temperatur von 125°C in der Aufheizphase, also T1(t1) = 25°C, T1(t2) = 125°C.

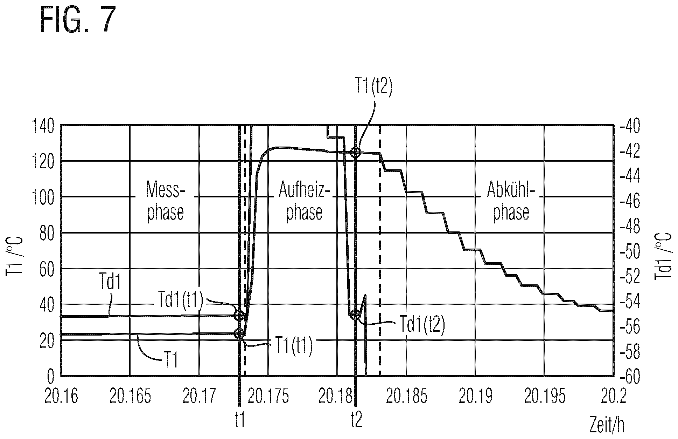

Anhand von Figur 7 wird nachfolgend das Vorgehen beispielhaft erläutert, wie mit Hilfe der ersten Feuchtesensoreinheit der Taupunkt-Korrekturparameter bestimmt wird. Das Diagramm zeigt zum einen den zeitlichen Verlauf der über die erste Feuchtesensoreinheit gemessenen Temperatur T1 während der Mess-, Aufheiz- und Abkühlphase; zum anderen ist der zeitliche Verlauf der aus der gemessenen Temperatur T1 und relativen Feuchte rH1 der ersten Feuchtesensoreinheit ermittelten Taupunkttemperatur Td1 gezeigt.

Wie aus der Figur ersichtlich, wird zum Zeitpunkt t1 in der Messphase kurz vor der Aufheizphase die Taupunktemperatur Td1(t1) in bekannter Art und Weise, z.B. über die sog. Magnusformeln, als Funktion f1 der Messwerte für Temperatur T1(t1) und relativer Feuchte rH1(t1) bestimmt; d.h. Td1(t1) = f1(T1(t1), rH1(T1)). Mit T1(t1) = 25°C und rH1(t1) = 3% ergibt sich etwa Td1(t1) = -23,18°C.

In Bezug auf die Funktion f1 bzw. die Magnusformeln sei auf die Veröffentlichung R. Dirksen, Ein einheitliches Berechnungsverfahren für die relative Feuchte am Meteorologischen Observatorium Lindenberg, MOL-RAO Aktuell, 2/2019 verwiesen; vgl. https://www.dwd.de/DE/forschung/atmosphaerenbeob/lindenbergersaeule/ra o_download/aktuell_2019_02.pdf.

Am Ende der Aufheizphase erfolgt analog zum Zeitpunkt t2 aus den Messwerten T1(t2), rH1(t2) die Bestimmung der Taupunkttemperatur Td1(t2); d.h. Td1(t2) = f1(T1(t2), rH1(t2)). Beispielsweise ergibt sich mit T1(t2) = 125°C und rH1(t2) = 0,04% die Taupunkttemperatur Td1(t2) = -23,49°C.

Die derart bestimmten Werte für die Taupunkttemperaturen Td1(t1) und Td1(t2) bei den beiden Temperaturen T1(t1), T1(t2) werden daraufhin verglichen. Sind diese Taupunkttemperaturen Td1(t1), Td1(t2) - wie im vorliegenden Beispiel - nicht identisch, so erfolgt die Bestimmung eines ersten Feuchte-Korrekturparameters rH_{Offset_1}. Hierzu wird zunächst eine ideale relative Feuchte rH1(t2)_{calc} bei der höheren Temperatur T1(t2) bestimmt, wenn gleichzeitig die Taupunkttemperatur Td1(t1) bei der niedrigeren Temperatur T1(t1) angenommen wird; d.h. rH1(t2)_{calc} = f2(T1(t2), Td1(t1). Auch in Bezug auf die Funktion f2 sei auf die o.g., bekannten Magnusformeln verwiesen; demzufolge ergibt sich die relative Feuchte aus dem Verhältnis der Sättigungsdampfdrücke bei der Taupunkttemperatur und der Mediumtemperatur. Mit den obigen Beispieldaten ergibt sich dann für die ideale relative Feuchte rH1(t2)_{calc} = f2(125°C, -23,18°C) = 0,0411%.

Der erste Feuchte-Korrekturparameter rH_{Offset_1} resultiert dann aus dem Vergleich der ermittelten idealen relativen Feuchte rH1(t2)_{calc} und der gemessenen relativen Feuchte rH1(t2) bei der höheren Temperatur T1(t2) gemäß rH_{Offset_1} = rH1(t2)_{calc} - rH1(t2). Unter Verwendung der vorstehenden Beispieldaten ergibt sich demnach rH_{Offset_1} = 0,0411% - 0,04% = 0,0011%. Der erste Feuchte-Korrekturparameter rH_{Offset_1} wird gemäß diesem Vorgehen in jedem Zyklus angepasst bzw. aktualisiert.

Mit Hilfe des derart ermittelten Feuchte-Korrekturparameters rH_{Offset_1} ergibt sich dann ein korrigierter Wert für die gemessene relative Feuchte rH₁ₖₒᵣᵣ gemäß rH1ₖₒᵣᵣ = rH1 + rH_{Offset_1}. Mit den o.g. Daten resultiert rH1ₖₒᵣᵣ = 0,04% + 0,0011% = 0,0411%.

Über den Feuchte-Korrekturparameter rH_{Offset_1} wird dann als Taupunkt-Korrekturparameter der absolute Taupunkt-Wert Td_{absolut} gemäß Td_{absolut} = f1(T1, rH1ₖₒᵣᵣ) = f1(T1, rH1 + rH_{Offset_1}) berechnet. Der Taupunkt-Korrekturparameter Td_{absolut} entspricht dabei dem Taupunkt-Wert Td1(t1) bei der ersten Temperatur T1(t1) nach der Korrektur. Mit den obigen Werten ergibt sich der Taupunkt-Korrekturparameter Td_{absolut} respektive absolute Taupunkt-Wert gemäß Td_{absolut} = f1(25°C, 3% + 0,0011%) = -23,18°C.

Der derart bestimmte Taupunkt-Korrekturparameter Td_{absolut} wird dann nachfolgend genutzt, um den durch die zweite, relativ-messende Feuchtesensoreinheit ermittelten Taupunkt zu korrigieren. Die Korrektur erfolgt dabei durch eine Offsetänderung an der durch die zweite Feuchtesensoreinheit gemessenen Feuchte rH2. Hierzu wird der durch die erste Feuchtesensoreinheit ermittelte absolute Taupunkt bzw. Taupunkt-Korrekturparameter Td_{absolut} als korrekt angenommen und mit dem Temperaturmesswert T2 der zweiten Feuchtesensoreinheit eine ideale relative Feuchte rH2i_{deal} ermittelt gemäß rH2i_{deal} = f2(T2, Td_{absolut}). Unter Verwendung der obigen Beispieldaten und T2 = 25°C ergibt sich dann rH2i_{deal} = f2(25°C, -22,18°C) = 3,0011 %.

Aus der derart ermittelten idealen relativen Feuchte rH2i_{deal} wird dann die erwähnte Offsetänderung der durch die zweite Feuchtesensoreinheit ermittelten relativen Feuchte rH2 bestimmt gemäß rH_{Offset_2} = rH2_{ideal} - rH2. Mit den Beispieldaten resultiert hier für einen Messwert rH2 = 2% somit rH_{Offset_2} = 3,0011% - 2% = 1,0011%.

In den nachfolgenden Messungen wird dann die derart ermittelte Offsetänderung rH_{Offset_2} verwendet, um laufend bis zur nächsten Korrekturparameter-Ermittlung die korrigierten Messwerte rH2ₖₒᵣᵣ zu bestimmen gemäß rH2ₖₒᵣᵣ = rH2 + rH_{Offset_2}. Mit rH2 = 2% und rH_{Offset_2} = 1,011% ergibt sich dann rH2ₖₒᵣᵣ = 3,0011%.

Die Korrektur der Feuchte-Messwerte der zweiten Feuchtesensoreinheit über die Offsetänderung bzw. Verrechnung des zweiten Feuchte-Korrekturparameters rH_{Offset_2} mit den Messwerten rH2 kann dabei auch nicht nur in einem einzigen Korrekturschritt erfolgen, sondern in mehreren Teilschritten, um auf diese Art und Weise eine zu abrupte Änderung in der ausgegebenen Taupunkttemperatur zu vermeiden. Beispielsweise kann hierzu eine Korrektur genutzt werden, die zeitabhängig linear immer größere Fehler korrigiert.

Aus den korrigierten Messwerten rH2ₖₒᵣᵣ kann dann die korrigierte Taupunkttemperatur Td2ₖₒᵣᵣ gemäß Td2ₖₒᵣᵣ = f1(T2 = 25°C, rH2ₖₒᵣᵣ = 3,0011%) = -23,18°C ermittelt werden. Zum Zeitpunkt der Korrektur bzw. Kompensation sind damit die ermittelten Taupunkte Td1_{absolut} und Td2ₖₒᵣᵣ der ersten und zweiten Feuchtesensoreinheit identisch, d.h. im vorliegenden Beispiel gilt Td1_{absolut} = Td2ₖₒᵣᵣ = -23,18°C. Wie etwa aus Figur 6 ersichtlich, driften diese Werte im Verlauf der weiteren Messphase wieder auseinander, bis dann wieder die nächste Korrektur erfolgt usw..

Neben dem konkret beschriebenen Ausführungsbeispielen und den bislang erläuterten Alternativen existieren im Rahmen der vorliegenden Erfindung selbstverständlich noch weitere Ausgestaltungsmöglichkeiten.

So wäre es grundsätzlich möglich, anstelle der in den Beispielen verwendeten kapazitiven Feuchtesensoren auch Feuchtesensoren in den Feuchtesensoreinheiten einzusetzen, die auf anderen Detektionsprinzipien basieren, beispielsweise resistive Feuchtesensoren.

Weiterhin ist es selbstverständlich nicht zwingend erforderlich, dass die beiden Feuchtesensoreinheiten jeweils als ASIC ausgebildet werden. Alternativ könnten diese auch als getrennte Fühler mit diskreten Komponenten aufgebaut sein.

Ebenso gibt es natürlich alternative Möglichkeiten, das der zweiten Feuchtesensoreinheit zugeordnete Kühlelement alternativ auszubilden, d.h. dieses ist nicht zwingend zweiteilig auszubilden. Beispielsweise wäre auch ein einteiliges Kühlelement einsetzbar, das auf ein Trägerelement aufschiebbar und mittels einer Klammer fixierbar ist.

Ferner ist denkbar, dass die erste und zweite Feuchtesensoreinheit nach einer gewissen Zeit vertauscht werden und dann jeweils die Funktionalität der anderen Feuchtesensoreinheit übernehmen; das wäre insbesondere im Fall des zweiten erläuterten Ausführungsbeispiels möglich. Eine derartige Variante kann z.B. im Hinblick auf die zeitliche Stabilität des verwendeten Polymers für eine kapazitive Feuchtemessung vorteilhaft sein.

Desweiteren muss auch das Aufheizen der ersten Feuchtesensoreinheit nicht unbedingt streng zyklisch bzw. periodisch erfolgen, sondern kann auch in geeigneter Art und Weise unregelmäßig vorgenommen werden.

Weiterhin ist nicht zwingend erforderlich, dass im Rahmen des erläuterten Verfahrens die Messungen bei genau zwei Temperaturen erfolgen, nämlich bei Raumtemperatur und einer Temperatur von 125° erfolgen. Es wäre grundsätzlich auch möglich, eine Messung bei einer weiteren, dritten Temperatur zu machen und darüber neben einem ersten Feuchte-Korrekturparameter rH_{Offset_1} einen weiteren Feuchte-Korrekturparameter rH_{gain_1} als Korrekturgröße zu bestimmen. Denkbar wäre hierbei auch, eine rH/T-Kennlinie aufzunehmen und über die Variation der Korrekturparameter rH_{Offset_1}, rH_{gain_1} dann auf eine gemessene Taupunkttemperatur zu schließen, die die geringste Abweichung zur theoretischen rH/T-Kennlinie aufweist , etc..

## Patentansprüche

1. Messvorrichtung zur Bestimmung und Ausgabe der Taupunkttemperatur (Td) eines umgebenden Mediums, mit
- einer ersten Feuchtesensoreinheit (10; 110; 210), die zur Bestimmung mindestens eines Taupunkt-Korrekturparameters (Td_{absolut}) ausgebildet ist und einen ersten Feuchtesensor (11) , einen ersten Temperatursensor (12) sowie ein Temperaturänderungselement (13) umfasst, und
- einer zweiten Feuchtesensoreinheit (20; 120; 220), die zur kontinuierlichen Bestimmung der Taupunkttemperatur ausgebildet ist und einen zweiten Feuchtesensor (21) und einen zweiten Temperatursensor (2) umfasst, und
- einer Steuereinheit (30), die derart ausgebildet und eingerichtet ist,
- um die Temperatur der ersten Feuchtesensoreinheit (10; 110; 210) über das Temperaturänderungselement (13) zu verändern und dabei einen Taupunkt-Korrekturparameter (Td_{absolut}) zu bestimmen, und
- um den Taupunkt-Korrekturparameter (Td_{absolut}) aus der ersten Feuchtesensoreinheit (10; 110; 210) heranzuziehen, um Messwerte (rH2) der zweiten Feuchtesensoreinheit (20; 120; 220) damit zu korrigieren und basierend auf den korrigierten Messwerten (rH2ₖₒᵣᵣ) kontinuierlich korrigierte Taupunkttemperaturen (Td2ₖₒᵣᵣ) auszugeben.

2. Messvorrichtung nach Anspruch 1, wobei die zweite Feuchtesensoreinheit (20; 120; 220) mit einem Kühlelement (23; 123; 223) thermisch gekoppelt ist, das Wärme von der zweiten Feuchtesensoreinheit (20; 120; 220) an die Umgebung ableitet.

3. Messvorrichtung nach Anspruch 1 oder 2, wobei die zweite Feuchtesensoreinheit (20; 120; 220) thermisch entkoppelt von der ersten Feuchtesensoreinheit (10; 110; 210) angeordnet ist.

4. Messvorrichtung nach Anspruch 3,
- wobei die beiden Feuchtesensoreinheiten (110, 120) an den entgegengesetzten Enden eines Trägerelements (115) angeordnet sind, welches im Bereich zwischen den beiden Feuchtesensoreinheiten (110, 120) zur thermischen Entkopplung materialverringert ausgebildet ist, und
- wobei das Trägerelement (115) von einem Gehäuse (150) umgeben ist, das mehrere Öffnungsfenster (151, 152) aufweist.

5. Messvorrichtung nach Anspruch 3, wobei die beiden Feuchtesensoreinheiten (210, 220) auf zwei separaten Trägerelementen (215.1, 215.2) angeordnet sind, zwischen denen ein Wärmeleitschild (240) angeordnet ist, welcher die durch Wärmestrahlung darauf übertragene Wärme in Richtung eines damit verbundenen Kühlkörpers (223) ableitet.

6. Messvorrichtung nach Anspruch 2 und Anspruch 4, wobei benachbart zur zweiten Feuchtesensoreinheit (120) als Kühlelement (123) ein Kühlkörper aus einem gut wärmeleitenden Material auf dem Trägerelement (115) angeordnet ist.

7. Messvorrichtung nach Anspruch 4 oder 5, wobei mindestens ein Trägerelement (115; 215.1, 215.2) einen elektrischen Anschluss zur Verbindung mit der Steuereinheit (30) aufweist, um Daten und Steuersignale zwischen den Feuchtesensoreinheiten (10, 20; 110, 120; 210, 220) und der Steuereinheit (30) zu übertragen.

8. Messvorrichtung nach mindestens einem der vorhergehenden Ansprüche, wobei die beiden Feuchtesensoreinheiten (10, 20; 110, 120; 210, 220) als integrierte Bausteine ausgebildet sind.

9. Verfahren zur Bestimmung und Ausgabe der Taupunkttemperatur eines umgebenden Mediums, mit
- einer ersten Feuchtesensoreinheit (10; 110; 210), aus deren Messwerten bezüglich Temperatur (T1(t1), T1(t2)) und relativer Feuchte (rH1(t1), rH1(t2)) mindestens ein Taupunkt-Korrekturparameter (Td_{absolut}) bestimmt wird, und
- einer zweiten Feuchtesensoreinheit (20; 120; 220), aus deren Messwerten bezüglich Temperatur (T2) und relativer Feuchte (rH2) kontinuierlich eine Taupunkttemperatur bestimmt und ausgegeben wird, wobei
- die Temperatur der ersten Feuchtesensoreinheit (10; 110; 210) verändert und dabei jeweils ein Taupunkt-Korrekturparameter (Td_{absolut}) bestimmt wird, und
- der Taupunkt-Korrekturparameter (Td_{absolut}) verwendet wird, um einen Messwert (rH2) der zweiten Feuchtesensoreinheit (20; 120; 220) damit zu korrigieren und basierend auf den korrigierten Messwerten (rH2ₖₒᵣᵣ) kontinuierlich korrigierte Taupunkttemperaturen (Td2ₖₒᵣᵣ) auszugeben.

10. Verfahren nach Anspruch 9, wobei das Verändern der Temperatur und Bestimmen des mindestens einen Taupunkt-Korrekturparameters (Td_{absolut}) zyklisch erfolgt.

11. Verfahren nach Anspruch 9 oder 10, wobei zur Bestimmung des mindestens einen Taupunkt-Korrekturparameters (Td_{absolut}) über die erste Feuchtesensoreinheit (10; 110; 210) zu mindestens zwei definierten Zeitpunkten (t1, t2) bei unterschiedlichen Temperaturen aus den jeweils gemessenen Temperaturen (T1(t1), T1(t2) und relativen Feuchten (rH1(t1), rH1(t2)) die jeweiligen Taupunkttemperaturen (Td1(t1), Td1(t2)) bestimmt werden und im Fall der Nicht-Übereinstimmung der beiden Taupunkttemperaturen (Td1(t1), Td1(t2)) ein Messwert bezüglich relativer Feuchte (rH1(t2)) so korrigiert wird, dass die Taupunkttemperaturen (Td1(t1), Td1(t2)) bei den unterschiedlichen Temperaturen (T1(t1), T1 (t2)) übereinstimmen.

12. Verfahren nach Anspruch 9 oder 10, wobei zur Bestimmung des mindestens einen Taupunkt-Korrekturparameters (Td_{absolut}) über die erste Feuchtesensoreinheit (10; 110; 210)
- zu mindestens zwei definierten Zeitpunkten (t1, t2) bei unterschiedlichen Temperaturen aus den jeweils gemessenen Temperaturen (T1(t1), T1 (t2)) und relativen Feuchten (rH1(t1), rH 1 (t2)) die jeweiligen Taupunkttemperaturen (Td1(t1), Td1 (t2)) bestimmt werden, und
- aus dem ermittelten Taupunkt (Td1(t1)) bei der niedrigeren Temperatur (T1(t1)) und der gemessenen höheren Temperatur (T1(t2)) eine ideale relative Feuchte (rH1(t2)_{calc}) bestimmt wird, und
- aus der Differenz zwischen der idealen relativen Feuchte (rH1(t2)_{calc}) und der gemessenen relativen Feuchte (rH1(t2)) bei der höheren Temperatur (T2) ein erster Feuchte-Korrekturparameter (rH_{Offset_1}) bestimmt wird, und
- mit Hilfe des ersten Feuchte-Korrekturparameters (rH_{Offset_1}) der Taupunkt-Korrekturparameter (Td_{absolut}) in Form eines absoluten Taupunkt-Werts bestimmt wird, und
- der absolute Taupunkt-Wert herangezogen wird, um einen zweiten Feuchte-Korrekturparameter (rH_{Offset_2}) zu bestimmen, der nachfolgend mit den Messwerten bezüglich relativer Feuchte (rH2) der zweiten Feuchtesensoreinheit (20; 120; 220) zu korrigierten Messwerten bezüglich relativer Feuchte (rH2ₖₒᵣᵣ) verrechnet wird, um kontinuierlich korrigierte Taupunkttemperaturen (Td2ₖₒᵣᵣ) auszugeben.

13. Verfahren nach Anspruch 12, wobei die Verrechnung des zweiten Feuchte-Korrekturparameters (rH_{Offset_2}) mit den Messwerten (rH2) der zweiten Feuchtesensoreinheit (20; 120; 220) bezüglich relativer Feuchte schrittweise erfolgt.

14. Verfahren nach Anspruch 10, wobei die erste Feuchtesensoreinheit (10; 110; 210) zyklisch eine Aufheizphase, eine Abkühlphase und eine Messphase durchläuft und in allen Phasen über die zweite Feuchtesensoreinheit (20; 120; 220) kontinuierlich die Taupunkttemperatur bestimmt und eine korrigierte Taupunkttemperatur (Td2ₖₒᵣᵣ) ausgegeben wird.
